# EUROPEAN PATENT SPECIFICATION

(11) **EP 1 705 998 B1**
(45) Date of publication and mention of the grant of the patent: **21.05.2014**
(21) Application number: 05701230.4
(22) Date of filing: 26.01.2005
(51) Int. Cl.: A23C 19/06, A23C 19/032, C12C 5/00, A23L 1/317, A23L 1/03

(54) **Use of a carboxypeptidase**
Verwendung eines Carboxypeptidase
Utilisation d'une carboxypeptidase

(30) Priority: 30.01.2004 EP 04075294
(43) Date of publication of application: 04.10.2006
(73) Proprietor: DSM IP Assets B.V., 6411 TE Heerlen (NL)
(72) Inventor: VAN DIJK, Albertus, Alard, 3137 PB Vlaardingen (NL); FOLKERTSMA, Baukje, 2613 PH Delft (NL); DEKKER, Petrus, Jacobus, Theodorus, 2497 AE Den Haag (NL)
(74) Representative: Elkenbracht, Johan Christiaan
(86) International application number: PCT/EP2005/000833
(87) International publication number: WO 2005/074695

(56) References cited:
- WO-A-03/004634
- BLINKOVSKY ALEXANDER M ET AL: "Purification, characterization, and heterologous expression in Fusarium venenatum of a novel serine carboxypeptidase from Aspergillus oryzae" APPLIED AND ENVIRONMENTAL MICROBIOLOGY, WASHINGTON,DC, US, vol. 65, no. 8, August 1999 (1999-08), pages 3298-3303, XP002186752 ISSN: 0099-2240
- TRANSFIGURACION J C ET AL: "PURIFICATION AND CHARACTERIZATION OF A CARBOXYPEPTIDASE Y FROM KLUYVEROMYCES FRAGILIS JSB95" JOURNAL OF DAIRY SCIENCE, XX, US, vol. 81, no. 3, 1998, pages 647-654, XP001013643 ISSN: 0022-0302
- DATABASE BIOSIS [Online] BIOSCIENCES INFORMATION SERVICE, PHILADELPHIA, PA, US; 1986, FREY J P ET AL: "PEPTIDASES AND PROTEASES IN BARLEY EXTRACT A POTENTIAL SOURCE OF ENZYMES FOR USE IN CHEESE RIPENING" XP002291045 Database accession no. PREV198682111020 & MILCHWISSENSCHAFT, vol. 41, no. 8, 1986, pages 488-489, ISSN: 0026-3788
- DATABASE WPI Section Ch, Week 199532 Derwent Publications Ltd., London, GB; Class D13, AN 1995-242691 XP002291046 & JP 07 147898 A (OGAWA KORYO KK) 13 June 1995 (1995-06-13)
- SAHA B C ET AL: "Debittering of protein hydrolyzates" BIOTECHNOLOGY ADVANCES, ELSEVIER PUBLISHING, BARKING, GB, vol. 19, no. 5, September 2001 (2001-09), pages 355-370, XP004319701 ISSN: 0734-9750

## Description

### Field of the invention

The present invention relates to cheese ripening.

### Background of the invention

Flavour of food products is one of the key attributes for the consumer. In fermented products, e.g. dairy products, flavors are derived from milk components by enzymatic activities of micro-organisms. In cheese for instance, various flavour compounds have been identified as being essential and many of them are derived from casein degradation. Other enzymatic processes, such as lipolysis, are also involved, most notably in cheese where fungi are involved in the ripening process, e.g. Camembert and Roquefort cheese. In addition, lactose fermentation might lead to the flavour compounds such as propionic acid (Smit et al, Food Res. Int. (2000) 33, 153-160).

Proteolysis in cheese during ripening plays a vital role in the development of texture as well as flavour and has been subject of several reviews (see e.g. McSweeney & Sousa, Lait (2000) 80, 293-324). Proteolysis contributes to textural changes of the cheese matrix, due to breakdown of the protein network, decrease in *a_{w}*, through water binding by liberated carboxyl and amino groups and increase in pH, which facilitates the release of sapid compounds during mastication (Sousa et al, Int. Dairy Journal (2001), 11, 327-345). It contributes directly to flavour and to off-flavour (e.g. bitterness) of cheese through the formation of peptides and free amino acids as well as liberation of substrates (amino acids) for secondary catabolic changes, *i.e*. transamination, deamination, decarboxylation, desulphuration, catabolism of aromatic amino acids and reactions of amino acids with other compounds. The rate and pattern of proteolysis may be influenced by location within the cheese.

Cheese ripening is a time-consuming process involving complex and well-balanced reactions between glycolysis, proteolysis and lipolysis of the milk components. In most cheeses, bacterial enzymes play a major role in this process. It is well known that changing the bacterial enzyme content is cheese directly affects the rate of cheese ripening and its final flavour (Klein & Lortal, Int. Dairy Journal (1999) 9, 751-762.). A way to influence cheese ripening is to increase the bacterial enzyme pool in cheese curd by the addition of whole lactic acid bacteria, unable to grow and produce significant levels of lactic acid, but still delivering active ripening enzymes during cheese ageing. The starters are normally weakened and referred to as attenuated.

Since cheese ripening is a time consuming process it is also costly. Cheeses need to be stored during ripening under precisely defined conditions for temperature and humidity for weeks to months. The ripening time varies considerably between the various cheeses, from 3 weeks (e.g. Mozzarella) to more than 2 years (e.g. Parmesan, extra mature cheddar). Any process that would result in acceleration of cheese ripening is interesting from an economic point of view: the same amount of cheese can be produced in a shorter time interval.

Proteolysis in cheese is a very complex process, and proteases from various origins are involved (for review see e.g. Fox & McSweeney, Food Rev. Int (1996) 12, 457-509). Such proteases are the coagulant that was used during cheese manufacture (e.g. chymosin, pepsin or fungal acid proteinases), milk own proteins (e.g. plasmin), the proteases provided by the starter bacteria, proteases from non-starter adventitious microflora, proteases from a second inocculum (in some varieties, *e.g. P. roqueforti, P camemberti, Br. Linens*)*,* attenuated bacterial cells and exogenous proteases. The attenuated cells and the exogenous proteases are recent tools in the development of acceleration of cheese ripening. The generation of free amino acids is an important step in the acceleration of cheese ripening. Although the free amino acids contribute to the overall cheese flavour, their contribution is relatively small. The amino acids are the precursors, which are subsequently converted by the micro-organisms that are present in the cheese to flavour compounds. Availability of amino acids is therefore important for cheese flavour formation and thus for cheese ripening.

The main alternative to the use of natural cheese in processed consumer foods requiring a cheese flavour are high-intensity cheese flavour concentrates such as enzyme-modified cheese (EMCs), cheese powders and cheese flavours (Kilcawley, Wilkinson & Fox, Int. Dairy Journal (1998), 8, 1-10). Cheese flavours are not produced for use in cheese as such but are produced to be applied in other food that conventionally contains natural cheese. Cheese is traditionally added to products as a spray dried preparation for flavour, appearance and texture enhancement. The amount of cheese used varies, and the overall flavour and quality of the product depends on the type of cheese used. Cheese that has been treated enzymatically to enhance the flavour or a significant portion of the profile of that cheese is considered to be an EMC and it provides the food manufacturer with a strong cheese note in a form that is cost effective, nutritious and natural (Kilcawley, Wilkinson & Fox, Int. Dairy Journal (1998), 8, 1-10). EMCs have a flavour profile, which may be quite different from that of a natural cheese and yet on dilution with a suitable bland or nearly bland base, provide the desired cheesy note in the end product. The basis of EMC technology is the use of specific enzymes to produce typical cheese flavours from suitable substrates. Proteases, which term includes both endo-proteases and exo-proteases, are important enzymes in EMC production. Their role is similar to that in cheese ripening. Proteolysis in EMC is extensive and produces both high levels of savoury and bitter notes; the latter can be prevented, removed or masked by either controlled proteolysis, addition of specific exopeptidases or inclusion of masking agents, e.g. mature cheese or monosodium glutamate (Wilkinson & Kilcawley, Bulletin of the IDF (2002), 371, 10-15).

Many proteases are involved in the generation of cheese flavours. The generation of the proper flavour for a cheese (or cheese derived product like EMC) requires a delicate balance of proteolytic activities from the proteases involved. Any imbalance will easily lead to flavours that are not wanted, such as bitterness development. Especially the development of bitterness in cheese (or EMC) has been well described and documented (see e.g. LeMieux & Simard, Lait (1991) 71, 599-636; Lemieux & Simard, Lait (1992) 72, 335-382) The development of proteases for cheese or EMC to enhance ripening processes is therefore a very delicate and complicated process. Exo-proteases are preferred over endo-proteases because they have a lower tendency to induce formation of bitterness. Endo-proteases are known to easily introduce such bitterness and are therefore preferably not used. There is, however, a clear industrial need for cheese ripening enzymes such as proteases, and over the years several commercial protease preparation have been introduced into the market. An overview of available commercial products is given in several papers (Wilkinson, van den Berg & Law, Bulletin of the IDF (2002) 371, 16-19; Kilcawley, Wilkinson & Fox, Food Biotechnol (2002) 16, 29-55; Kilcawley, Wilkinson & Fox, Enzyme Microb. Technol. (2002) 31, 310-320). Examples include enzyme preparations derived from fungal species (including but not limited to Bioprotease P Conc and Bioprotease A conc from Quest, The Netherlands, Protease M & Protease A and Acid protease A from Amano, Promod 215 from Biocatalysts, Sternzyme B5026 from Stem, Flavourzyme MG/A from Novozymes, Denmark) and bacterial species (including but not limited to Protamex and Neutrase from Novozymes, Denmark, Protease N from Amano, Promod 24P and 24L from Biocatalysts, Protease B500 from DSM, The Netherlands, and Protease 200L from Rhodia Foods, France). The proteases vary considerably in composition with respect to presence of specific proteases and/or the ratio in which these proteases occur in a specific product. The papers by Kilcawley, Wilkinson and Fox, referred to above, clearly show that most commercial protease products are a mixture of endo- and exo-peptidase activities. Several products are developed to contain only exo-peptidase activity. For food applications, these are invariably amino-peptidases, and examples include DBS50 and DBP20 (from Rhodia, France), Corolase LAP (from Rohm, Germany), Flavourzyme MG/A (from Novozymes, Denmark), Accellerzyme AP (from DSM, The Netherlands) and Peptidase R (from Amano, Japan). The amino peptidases are developed and selected for the release amino acids that are important precursors of cheese flavour such as leucine, phenylalanine and valine. Several patent applications (e.g. WO96/38549) describe the preparation and use of amino peptidases, free from endo-proteases, which can be used to accelerate cheese ripening. Although there is a description of the use of a single wheat carboxy-peptidase to reduce the bitterness of bitter peptides from milk casein peptides (Umetsu, Matsuoka & Ichishima, J. Agric. Food Chem (1983) 31, 50-53), there is no description of the use of a protease preparation containing a single carboxy-peptidase activity that has been useful for the acceleration of cheese ripening. Commercial proteases preparations containing carboxy-peptidase activity are known (e.g. FlavorPro 192 from Biocatalysts) but these always contain mixtures of aminopeptidase, endo-protease and possibly other protease activities in addition to the carboxypeptidase activity.

Protease addition for cheese ripening can be done in various stages of cheese preparation. Preferably, the enzymes are added to the cheese milk prior to or together with the addition of the coagulant (e.g. chymosin). Addition at this point ensures a homogenous distribution of the enzymes throughout the cheese. Alternatively, the enzymes can be added in a later stage, e.g. during the salting stage in Cheddar making, but this introduces the risk of inhomogeneous enzyme distribution in the cheese and formation of so-called hot spots. For that reason, addition of the enzymes to the cheese milk is preferred. A disadvantage is that the majority of the enzyme (60-90%) is often not incorporated in the cheese curd, and is discarded in the whey fraction where it can give rise to unwanted (proteolysis) that makes the whey less or not suited for further applications. Especially endo-proteases with significant activity at pH5-7 could cause such unwanted side-activities, but also amino peptidase that often have optimal activity in this pH range may give rise to formation of e.g. unwanted flavours. Another potential problem of especially endo-protease addition to the cheese milk is that they interfere with the coagulation process, giving rise to a-specific hydrolysis leading to reduction of cheese yield. Also amino-peptidases can cause yield-losses since they usually are well active at pH6-7, the usual pH range of cheese making. Proteases that are not or almost not active at pH values during cheese making, but which become active in the cheese are preferred because they will not interfere with the cheese making process and will not cause unwanted reactions in the whey.

Blinkovsky A.M et al. (1999), Applied and Environmental Microbiology, vol.65, No.8, p.3298 - 3303 discloses a carboxypeptidase-I from A. Oryzae

### Description of the invention

According to the present invention, accelerated cheese ripening can be obtained by the use of a carboxy-peptidase-I from Aspergillus niger. The carboxy-peptidase preparation should be free from endo-protease activity, and should be able to at least release amino acids that are important for cheese flavour formation, such as leucine, phenylalanine, valine and methionine. The carboxypeptidase is added at activity levels between 1 and 2500 CPG/g substrate (e.g. cheese milk), preferably 1-250 CPG/g substrate or more preferably 1-25 CPG/g substrate. CPG-units are defined in example 1. Protease activity is measured by the hydrolysis of a casein (6 g/L assay solution) at pH6.0, 4°C for 1 hour. 1 PU is the amount of enzyme that produces, in one minute, a (TCA-soluble) hydrolysate, which (280 nm) absorbance is equal to a tyrosin solution of 1 µM). The carboxypeptidase preparation is defined as free of endo-protease activity when the ratio of endo-protease activity (PU) / carboxypeptidase activity (CPG) in the preparation is less than 0.01, preferably less than 0.001 and most preferably less than 0.0005. The carboxy-peptidase is a broad spectrum carboxy-peptida-I from Aspergillus niger that is able to release to majority of the natural amino acids from peptides or proteins. Broad spectrum carboxypeptidase is defined as an enzyme that is able to release at least 80% of the natural amino acids in amounts detectable by the method as described in example 3 of this application. Preferably the carboxypeptidase preparation contains a carboxy-peptidase-I from Aspergillus niger in which 90% of the carboxypeptidase activity is caused by a single enzyme, measured as described in example 1, but combinations of carboxypeptidases are also allowed.

We have surprisingly found that the use of a purified carboxy-peptidase CPD I (PEPG) from *Aspergillus* niger is well able to by its own accelerate cheese ripening. The enzyme has been described (Dal Degan, Ribadeau-dumas & Breddam, Appl. Environ. Microbiol (1992) 58, 2144-2152) and sequenced (Svendsen & Dal Degan, Bioch. Biophys. Acta (1998) 1387, 369-377). The carboxy-peptidase-I can also be used to accelerate cheese flavour development in EMCs. Other preferred applications of the carboxy-peptidase-I are in the field of flavour development in fermented foods like fermented sausages and beers in which, similar to the situation in cheese, availability of free amino acids like valine, leucine, isoleucine and phenylalanine as well as sulfur containing amino acids like methionine are known to be of particular importance.

### Legends to the figure.

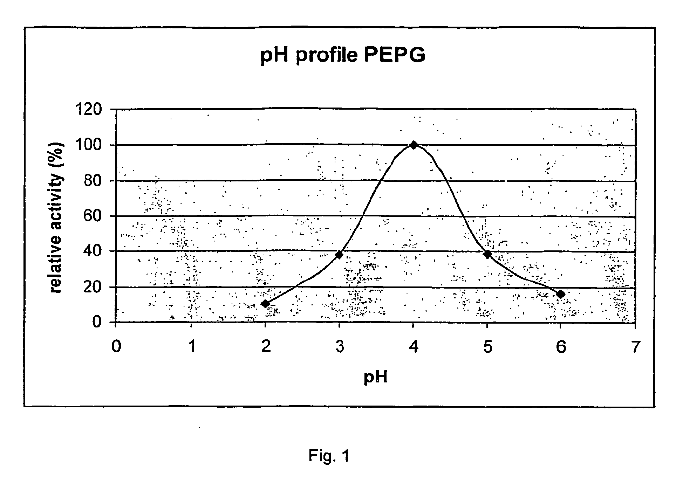

Figure 1 shows the activity profile **in relation** to the pH.

### Example 1

### Cloning of CPD-1 (PEPG)

The amino acid sequence of carboxypeptidase I (PEPG) of A. niger is described (Svendsen & Dal Degan, Bioch. Biophys. Acta (1998) 1387, 369-377). Degenerate PCR primers were designed to clone the pepG gene from a genomic library from Aspergillus niger N400 (CBS 120.49), using methods known to the skilled person in the art. The gene was fused to the 3' end of the glucoamylase promotor. Analogous examples of fusions of structural genes to the glucoamylase promotor have been described (EP-A-0420358, EP-A-0463706 and WO99/38956). First the pepG structural gene was PCR amplified from a genomic fragment containing the gene and purified. Second, the promotor region of the glaA gene was PCR amplified using , at the 3' end, a primer that overlaps the 5' end of the pepG structural gene. Third, the two PCR fragments were fused via fusion PCR with an oligonucleotide primer 5' of the glaA promotor, and an oligonucleotide overlapping the stopcodon of pepG in the reverse direction. Fourth, the resulting fusion fragment was cloned in *the A niger* expression vector pGBTOP7 (WO99/38956), resulting in a fusion plasmid containing the glaA promotor, pepG structural gene and the glaA terminator. This plasmid was digested with HindIII and co-transformed with pGBBAAS-1 digested with Xho I to *Aspergillus niger* ISO502, essentially as described in WO 99/38956. Transformants selected for growth on acetamide plates were analysed using colony PCR to check for the presence of pepG expression cassette, using known techniques. The gene sequence was determined. *A. niger* pepG transformants were cultivated in shake flask using methods as described previously (WO 99/38956). After growth for 6 days at 34 °C, supernatants were analysed on activity. Activity of PEPG was determined by adding 10 µl of the culture supernatant to a 990 µl of a solution containing 45 mM Na-acetate (pH4.5), 0.95 mM EDTA and 0.2 mM FA-Phe-Ala (obtained from Bachem). The change in optical density at 337 nm was followed. The decrease in optical density is a measure for the PEPG activity. One enzyme unit (1 CPG) is defined as the amount of enzyme needed to decrease the optical density at 337 nm by 1 absorbance unit per minute under the test conditions. The transformant showing the highest CPG value per ml was selected for PEPG expression.

### Example 2

### Purification of PEPG

PEPG was purified from the culture broth of *Aspergillus niger* expressing the enzyme according to the method described (Dal Degan, Ribadeau-dumas & Breddam, Appl. Environ. Microbiol (1992) 58, 2144-2152) with the exception that the CABS-Sepharose step was omitted. The activity of the final substantially purified enzyme was established to be 150 CPG/ml, using the activity measurement as described in example 1. Endo-protease activity was below detection limits (<0.6 PU/ml). The production and purification of PEPG were repeated yielding a final preparation containing 650 CPG/ml carboxy-peptidase activity and 2.25 PU/ml endo-protease activity. The ratio PU/CPG for the latter preparation was 0.003.

### Example 3

### Determination of the substrate specificity of PEPG

The substrate specificity of the purified PEPG was determined using substrates Z-Ala-X, in which Z is benzyloxycarbonyl and X is any of the amino acids (one letter code) A, D, E, F, G, H, I, K, L, M, N, P, Q, R, S, T, V, W, Y. All substrates were obtained from Bachem, except when X= Q or T, which substrates were obtained from PEPSCAN (The Netherlands) The enzyme specificity was determined at pH4.0 and 40 °C in solutions that contained 3 mM of the peptide substrates. The reaction was started by addition of the 5 µl enzyme solution ( 440 units/ml) to 95 µl of the reaction mixtures. Samples were taken for each substrate immediately at t=0 minutes and spotted on TLC-plates (Merck HPTLC [plates 20X10 Silica gel 60), another sample was taken after 45 minutes incubation and also spotted on the same TLC plate. As a control, the substrate solutions without the enzyme were spotted on the same TLC plate. The plate was stained for free amino groups by spraying with a ready to use ninhydrin spray (ACROS). Enzyme activity was rated from - (no activity), +/- (low activity) to + (little activity) to +++++ (very high activity). Very high activity (+++++) on a particular substrate is scored when all the substrate has already been converted at the t=0 sample. Results are as follows:

| X | Activity score | Ref | X | Activity score | Ref |
|---|---|---|---|---|---|
| A | ++ | 490 | M | +++++ | 5820 |
| C | Nt | nt | N | + | nt |
| D | + | 160 | P | +/- | 3 |
| E | ++ | nt | Q | ++ | 41 |
| F | ++++ | nt | R | ++ | 130 |
| G | + | 5 | S | ++ | 70 |
| H | + | 10 | T | ++ | nt |
| I | ++++ | 7090 | V | +++++ | 3380 |
| K | +++ | 200 | W | + | nt |
| L | +++++ | 2950 | Y | +++ | nt |

| | | | | | |
|---|---|---|---|---|---|
| nt : not tested. Ref: data extracted from Dal Degan, Ribadeau-dumas & Breddam, Appl. Environ. Microbiol (1992) 58, 2144-2152. Numbers indicate kcat/kM values in min⁻¹ mM⁻¹ | | | | | |

The table shows that the cloned and purified PEPG is similar to the one described by Dal Degan in 1992, but there are some unexpected differences. The enzyme preferentially liberates the hydrophobic amino acids F, I, L, M and V. The preference of the cloned gene is, however, different from the one described by Dal Degan *et al,* which has highest preference for I whereas the cloned enzyme shows highest activity on L, M and V. Also, the purified enzyme is rather active on K, more active than e.g. on A and D, which is different from the data described by Dal Degan *et al.* Clearly, the carboxy-peptidase is has a very broad substrate specificity and is able to handle all amino acids except possibly C, which was not tested.

### Example 4

### Demonstration of accelerated cheese ripening of PEPG in mini cheese (Cheddar type).

Miniature cheeses were produced as described by Shakeel-Ur-Rehman et al. (Protocol for the manufacture of miniature cheeses in Lait, 78 (1998), 607-620). Raw cows milk was pasteurized by heating for 30 minutes at 63°C. The pasteurized milk was transferred to wide mouth plastic centrifuge bottles (200mL per bottle) and cooled to 31 °C. Subsequently, 0.72 ml of starter culture DS 5LT1 (DSM Gist B.V., Delft, The Netherlands) was added to each of the 200 ml of pasteurised milk in the centrifuge bottles and the milk was ripened for 20 minutes. Than, CaCl₂ (132 µL of a 1 mol.L⁻¹ solution per 200mL ripened milk) was added, followed by addition of the coagulant (0.04 IMCU per ml). In case the experimental involved the use of PEPG, this enzyme was added together with the coagulant. The milk solutions were held for 40-50 minutes at 31°C until a coagulum was formed. The coagulum was cut manually by cutters of stretched wire, spaced 1 cm apart on a frame. Healing was allowed for 2 minutes followed by gently stirring for 10 minutes. After that, the temperature was increased gradually to 39°C over 30 minutes under continuous stirring of the curd / whey mixture. Upon reaching a pH of 6.2 the curd / whey mixtures were centrifuged at room temperature for 60 minutes at 1,700g. The whey was drained and the curds were held in a water bath at 36°C. The cheeses were inverted every 15 minutes until the pH had decreased to 5.2-5.3 and were then centrifuged at room temperature at 1,700g for 20 minutes. After manufacture the cheese were ripened at 12 °C and sensory analysis was performed after 3 and 6 weeks of ripening y a minimum panel of 3 people.

Several dosages of PEPG to the cheese milk were used: 0 (=control), 5, 50 and 500 CPG/200 ml cheese milk. The addition of PEPG clearly led to an overall increase in flavour intensity, leading to a more matured taste as compared to the control cheese. This was the case at all levels of PEPG addition, even though the lowest level of addition (5 CPG/200 ml) required 6 weeks ripening to give a clear effect. At the other doses (50 and 500 CPG/ml) the effect on taste was already obvious after 3 weeks of ripening. The results clearly showed that PEPG accelerates cheese flavour development, and that the effect was dose dependent, and that no off-tastes had developed.

### Example 5

### Demonstration of accelerated cheese ripening of PEPG in Gouda type cheese.

Gouda cheeses were prepared in 200L vats using the starter culture DelvoTec® DX31D (obtained from DSM) and Maxiren600 (obtained from DSM; 55 IMCU/I milk;DSM) as the coagulant, using a standard Gouda cheese manufacture protocol known to the person skilled in the art. Raw milk was standardised to a casein to fat ratio of approximately 0.9 and pasteurised for 15 seconds at 72°C. PEPG was added immediately prior to addition of Maxiren at a level of 25 CPG/L. A control cheese was prepared from the same milk batch using the same manufacturing process but without addition of PEPG. After coagulation the curd was cut and stirred for 20 minutes at a low speed. Following this half the whey was replaced with warm water (40% of initial volume) to increase the temperature from 31°C to 36°C. After this the curd/whey mixture was stirred, at an increasing speed, for another 30-40 minutes until the curd was firm enough for drainage. The curd was hooped and left for half an hour before being placed into 5 kg moulds. The cheeses were pressed, using increasing pressure, for around 4 hours after which the cheeses were left to rest overnight. The following morning they were placed into brine for 24 hours. After allowing the cheeses to dry, a protective coating was placed on the cheese and the cheeses started their ripening period. During this period they were kept at 15°C, relative humidity of approximately 80%. The cheeses were regularly turned and coated during the ripening period. Cheeses were organoleptically assessed after 6 weeks and 3 months of ripening by using a trained panel consisting of a minimum number of 8 people. After 6 weeks, the cheese containing PEPG received significantly higher scores for sweetness as compared to the control cheese. After 3 months of ripening, the cheese containing PEPG was clearly different from the control cheese, showing significantly higher flavour (and also clearly different creaminess.. The cheese flavour of the cheese containing PEPG was pleasant and more mature, as compared to the control cheese. The experiment clearly showed that PEPG accelerates the cheese flavour development and that no off-tastes developed.

### Example 6

### Demonstration of the pH profile of PEPG

The enzyme reaction was determined in buffers of various pH. The buffer at pH2,3 and 4 contained 0.1 M sodium phosphate, 0.05M citric acid and 0.05M acetic acid; the buffer at pH4,5 and 6 contained 0.05 M sodium phosphate, 0.05M acetic acid, and 0.05M Tris. The pH was adjusted to the correct value using 4M HCl or 4M NaOH. Substrate solution contained 8mM FA-Phe-Ala in methanol. The assay solution contained 965 µl buffer, 25 µl substrate solution and 10 µl purified enzyme. Reactions were performed at 25 °C, and change of absorption at 337 nm was followed for 10 minutes. The relative activity was calculated fomrt he change in absorbance. The results are the average of two separate measurements, except for the measurement at pH is 4, which was performed in duplo in two different buffers. The results are given in Figure 1.

The profile shows of Figure 1 that the enzyme has a pH optimum of pH 4. The optimum is clearly higher than pH optimum of 3.1-3.4 for the carboxy peptidase described by Dal Degan (Dal Degan, Ribadeau-dumas & Breddam, Appl. Environ. Microbiol (1992) 58, 2144-2152 and references sited therein).

### Example 7

### Use of carboxypeptidase for Enzyme modified cheese preparation.

A cheese paste was prepared from a mixture of 90% 5 weeks old Gouda cheese and 10% old Gouda cheese, basically as described by Smit et al. ( (1995). Ch-easy model: a cheese-based model to study cheese ripening. In P. Etievant, Bioflavours. (pp. 185-190).

Preparation of EMC using carboxypeptidase Young Gouda cheese (approximately 6 weeks old) was purchased from a local supermarket, and was finely grated. MilliQ-water was added to the grated cheese to reach a final water content of approximately 50% and, after mixing, the cheese paste was divided in portions of 200 grams in separate containers. The mixture was heated during 5 minutes at 80 °C to eliminate microbial growth. One of the containers was analyzed to verify elimination of microbial growth by plate count analysis for bacteria, yeasts and moulds. The other containers were stored at 4 °C for further use. When absence of microbial growth was confirmed by the plate count analysis, the prepared cheese pastes in the remaining containers were used.

Prior to making additions, the cheese paste was heated to 55°C and gently cooled to 30 °C. PEPG solutions were prepared in MilliQ water containing 1.6, 0.16 and 0.016 CPG/ml. Subsequently, 2 ml of each PEPG solution was added to individual containers containing 200g cheese paste, and the mixture was mixed by stirring; the control paste contained no PEPG but only milliQ The containers were than stored at 17 °C. After 4 weeks the flavour of the pastes was organoleptically assessed by a sensory panel. Increasing PEPG concentrations resulted in clearly increasing intensity of flavour of the cheese pastes. The PEPG is apparently useful in EMC processes to generate cheese flavour.

## Claims

1. A process for the flavour development in a fermented food, which fermented food is beer, sausage, cheese or a cheese derived product and whereby a carboxypeptidase-1 (CPD-1) from *Aspergillus niger* is used.

2. A process according to claim 1 whereby the carboxypeptidase-1 activity is for at least 90% caused by a single enzyme.

3. A process according to any one of claim 1 or 2 whereby the ratio of endoprotease activity (PU) and carboxypeptidase activity (CPG) is less than 0.01.

4. Use of a carboxypeptidase-1 from *Aspergillus niger* having a ratio of endoprotease activity (PU) and carboxypeptidase activity (CPG) of less than 0.01 in the preparation of a fermented food, which fermented food is beer, sausage, cheese or a cheese derived product.

5. Use of claim 4 in the preparation of EMC (enzyme modified cheese).

6. Use according to claim 4 or 5 for flavour generation.

## Patentansprüche

1. Verfahren für die Geschmacksentwicklung in einem fermentierten Lebensmittel, welches fermentierte Lebensmittel Bier, Wurst, Käse oder ein Käseabgeleitetes Produkt ist und wobei eine Carboxypeptidase-1 (CPD-1) aus *Aspergillus niger* verwendet wird.

2. Verfahren gemäß Anspruch 1, wobei die Carboxypeptidase-1-Aktivität zu wenigstens 90 % von einem einzigen Enzym verursacht wird.

3. Verfahren gemäß einem der Ansprüche 1 oder 2, wobei das Verhältnis von Endoprotease-Aktivität (PU) zu Carboxypeptidase-Aktivität (CPG) kleiner als 0,01 ist.

4. Verwendung einer Carboxypeptidase-1 aus *Aspergillus niger* mit einem Verhältnis von Endoprotease-Aktivität (PU) zu Carboxypeptidase-Aktivität (CPG) kleiner als 0,01 bei der Herstellung eines fermentierten Lebensmittels, welches fermentierte Lebensmittel Bier, Wurst, Käse oder ein Käse-abgeleitetes Produkt ist.

5. Verwendung gemäß Anspruch 4 bei der Herstellung von EMC (Enzym-modifizierter Käse).

6. Verwendung gemäß Anspruch 4 oder 5 für die Geschmackserzeugung.

## Revendications

1. Procédé de développement d'arôme dans un aliment fermenté, lequel aliment fermenté est la bière, la saucisse, le fromage ou un produit issu du fromage et une carboxypeptidase-1 (CPD-1) *d'Aspergillus* niger étant utilisée.

2. Procédé selon la revendication 1, **caractérisé en ce que** l'activité de la carboxypeptidase-1 est provoquée par une seule enzyme pour au moins 90 %.

3. Procédé selon l'une ou l'autre des revendications 1 et 2, **caractérisé en ce que** le rapport entre l'activité d'endoprotéase (PU) et l'activité de carboxypeptidase (CPG) est inférieur à 0,01.

4. Utilisation d'une carboxypeptidase-1 *d'Aspergillus niger* ayant un rapport entre l'activité d'endoprotéase (PU) et l'activité de carboxypeptidase (CPG) inférieur à 0,01 dans la préparation d'un aliment fermenté, lequel aliment fermenté est la bière, la saucisse, le fromage ou un produit issu du fromage.

5. Utilisation selon la revendication 4, dans la préparation d'EMC (fromage modifié par une enzyme).

6. Utilisation selon la revendication 4 ou 5 pour la génération d'arôme.
